# EUROPEAN PATENT APPLICATION

(11) **EP 4 763 327 A1**
(43) Date of publication of application: **24.06.2026**
(21) Application number: 25223718.5
(22) Date of filing: 16.12.2025
(51) Int. Cl.: B01J 13/04

(54) **TANNIN-BASED EXPANDABLE MICROSPHERES**

(30) Priority: 20.12.2024 EP 24222640; 27.05.2025 EP 25179084
(71) Applicant: Nouryon Chemicals International B.V., 1101 BZ Amsterdam (NL)
(72) Inventor: WIJTMANS, Roel, 1101 BZ Amsterdam (NL); ANDREASSON, Bo, 1101 BZ Amsterdam (NL)
(74) Representative: Ingrassia, Fisher & Lorenz UK Ltd.

(57) **Abstract**

The invention relates to tannin-based thermally expandable microspheres, and also to a process for their production. The thermally expandable microspheres comprise a thermoplastic shell surrounding a hollow core, wherein the hollow core comprises a blowing agent, and the thermoplastic shell comprises tannin.

## Description

### Technical Field

The invention relates to tannin-based thermally expandable microspheres, and also to a process for their production.

### Background Art

Thermally expandable microspheres are known in the art, and are described for example in US3615972, WO 00/37547 and WO2007/091960. A number of examples are sold under the trade name Expancel^{®}. They can be expanded to form extremely low weight and low density fillers, and find use in applications such as foamed or low density resins, paints and coatings, cements, inks and crack fillers. Consumer products that often contain expandable microspheres include lightweight shoe soles (for example for running shoes), textured coverings such as wallpaper, solar reflective and insulating coatings, food packaging sealants, wine corks, artificial leather, foams for protective helmet liners, and automotive weather strips.

Thermally expandable polymer microspheres usually comprise a thermoplastic shell, with a hollow core comprising a blowing agent which expands on heating. Examples of blowing agents include low boiling hydrocarbons or halogenated hydrocarbons, which are liquid at room temperature, but which vapourise on heating. To produce expanded microspheres, the expandable microspheres are heated, such that the thermoplastic shell softens, and the blowing agent vapourises and expands, thus expanding the microsphere. Typically, the microsphere diameter can increase between 1.5 and 8 times during expansion. Expandable microspheres are marketed in various forms, e.g. as dry free-flowing particles, as aqueous slurry or as a partially dewatered wet cake.

Expandable microspheres can be produced for instance by polymerizing ethylenically unsaturated monomers in the presence of a blowing agent, for example using a suspension-polymerisation process. Typical monomers include those based on acrylates, acrylonitriles, acrylamides, vinylidene dichloride and styrenes. A problem associated with such thermoplastic polymers is that they are typically derived from petrochemicals, and are not derived from sustainable sources. In addition, many polymers are non-biodegradeable, or at least biodegrade so slowly that they risk cumulative build-up in the environment. However, it is not necessarily easy merely to replace the monomers with more sustainable-derived alternatives, since it is necessary to ensure that acceptable expansion performance is maintained. For example, the polymer must have the right surface energy to get a core-shell particle in a suspension polymerization reaction so that the blowing agent is encapsulated. In addition, the produced polymer must have good gas barrier properties to be able to retain the blowing agent. Further, the polymer must have suitable viscoelastic properties above glass transition temperature T_{g} so that the shell can be stretched out during expansion. Therefore, replacement of conventional monomers by bio-based monomers is not easy.

Expandable microspheres have been described, in which at least a portion of the monomers making up the thermoplastic shell are bio-based, being derivable from renewable sources. For example, WO2019/043235 describes polymers comprising lactone monomers, WO2019/101749 describes copolymers comprising itaconate dialkylester monomers, and WO2020/099440 as well as WO2021/234010 A1 disclose thermally expandable microspheres made from cellulose-based biopolymers.

However, it has been found that these bio-based expandable microspheres may have some drawbacks from a commercial point of view, such as reduced commercial availability of the raw material and a higher price of the raw material compared to fossil-fuel based raw material, but also from a viewpoint of performance of the expandable microspheres, such as sometimes unsatisfactory and less flexible expansion characteristics which might not always be exactly tuneable for a particular desired application. Moreover, there is also always room for improvement as regards biodegradability of the thermoplastic shell. Even further, it has turned out that storage-stability and in particular water-resistance of bio-based microspheres is not always satisfying. Hence, in order to improve storage stability, often further steps are required during productions of such known bio-based microspheres, such as additional post-heating steps as for instance described in WO 2024/089208 A1. Additional production steps, however, are often tedious and costly.

Hence, there remains a need for alternative thermally expandable microspheres in which the thermoplastic shell is, at least in part, derived from sustainable sources. Moreover, there further remains a need for providing expandable microspheres in which the thermoplastic shell is, at least in part, derived from sustainable sources and wherein the expandable microspheres have satisfactory expansion characteristics which even more preferably are tunable according to needs. It would be further desirable if such alternative thermally expandable microspheres also have sufficient storage-stability and in particular water-resistance already as such so that during production thereof additional steps of further improving the storage-stability can be avoided. The present invention is, therefore, directed to finding improved bio-based thermally expandable microspheres having at least some of the aforementioned desirable properties.

### Summary of Invention

The present invention is directed to thermally expandable microspheres comprising a thermoplastic shell surrounding a hollow core, wherein the hollow core comprises a blowing agent, and the thermoplastic shell comprises a tannin. The thermally expandable microspheres described herein solve the above-described problems.

The invention is also directed to a method for preparing thermally expandable microspheres comprising a thermoplastic shell surrounding a hollow core, wherein the hollow core comprises a blowing agent, and the thermoplastic shell comprises a tannin, the method comprising the following steps: (i) preparing a mixture comprising the tannin and the blowing agent in a solvent; and (ii) spray-drying the mixture obtained in step (i) so to obtain thermally expandable microspheres.

### Brief Description of Drawings

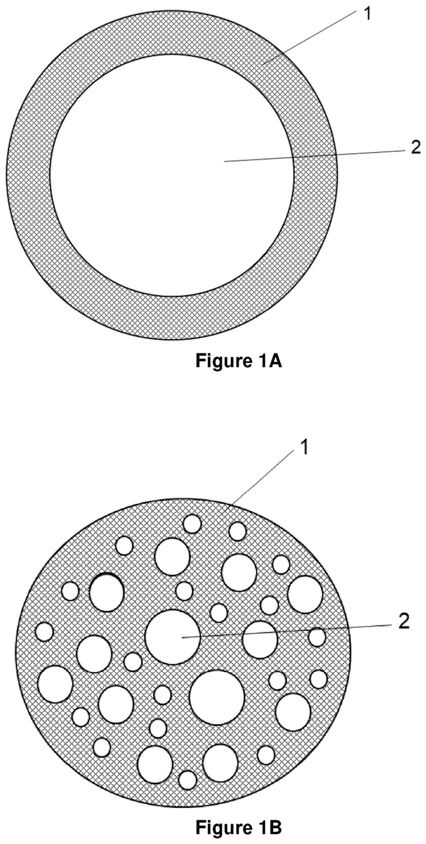

Figure 1 illustrates the difference between a single core (Figure 1A) and multi-core (Figure 1B) microsphere.

### Description of Embodiments

One aspect of the present invention are thermally expandable microspheres comprising a thermoplastic shell surrounding a hollow core, wherein the hollow core comprises a blowing agent, and the thermoplastic shell comprises a tannin.

The expandable microspheres are based on a thermoplastic shell comprising a tannin. Tannins, which are also called tannoids, are widely distributed in many species of plants, where they play a role in protection from predation, for instance by acting as pesticides, and might help in regulating plant growth. The astringency from the tannins is what causes the dry and puckery feeling in the mouth following the consumption of for instance unripened fruit, red wine or tea. Likewise, the destruction or modification of tannins with time plays an important role when determining harvesting times.

Tannins are a class of polyphenolic biomolecules that are usually able to bind to and precipitate macromolecules, such as proteins, and various other organic compounds including amino acids and alkaloids. Such ability of tannins to bind to and precipitate macromolecules and various other organic compounds is usually due to the hydroxy groups in the tannins but may also further be due to additional other suitable groups present in the tannins, such as carboxyl groups and aromatic groups. These functionals groups are able to form strong complexes with the macromolecules and the various other organic compounds and hence lead to precipitation of them. Hence, in some embodiments, a tannin as described herein is a polyphenolic compound containing hydroxyl groups and, optionally, also other suitable functional groups, such as carboxyl groups. The term "phenolic" or "phenol" as used herein describes any compound which comprises a group that contains a 6-membered aromatic carboxylic ring which is substituted with at least one hydroxyl group. In other words, the 6-membered aromatic carboxylic ring may be further substituted with groups different from hydrogen such as further hydroxy groups or also carboxy groups. Likewise, the term "polyphenolic" as used herein describes any compound which comprises at least two groups that each contain a 6-membered aromatic carboxylic ring which is substituted with at least one hydroxyl group. Consequently, a tannin as described herein can be considered a phenol-based polymer comprising at least two phenol groups. Typically, tannin molecules contain at least six, preferably at least 12, and even more preferably at least 18 hydroxyl groups. Moreover, tannin molecules typically may contain in addition at least five, preferably at least seven, and even more preferably at least nine phenyl groups. Hence, a tannin as described herein may contain at least four, preferably at least six, even more preferably at least eight and particularly preferably at least ten phenol groups.

In some embodiments, the tannin can be selected from the three major classes of tannins, namely hydrolysable tannins, phlorotannins, and condensed tannins.

Hydrolysable tannins contain a hydrolysable bond and are usually based on gallic acid (3,4,5-trihydroxybenzoic acid). In some embodiments, hydrolysable tannins comprise base units of gallic acid which are condensed together. The condensation of a carboxy group of a first gallic acid molecule and a hydroxy group of a second gallic acid molecule forms an ester bond linking the two gallic acid molecules. Hydrolysable tannins can comprise units derived from further components, such as hydroxyl group and/or carboxyl-group containing molecules, for instance sugar molecules. In some embodiments, the hydrolysable tannin is tannic acid. Tannic acid may have the overall chemical sum formula of C₇₆H₅₂O₄₆, which corresponds with decagalloyl glucose. However, tannic acid can also be a mixture of polygalloyl glucoses or polygalloyl quinic acid esters with the number of galloyl moieties per molecule ranging from 2 up to 12 depending. In preferred embodiments, the tannic acid comprises 1,2,3,4,6-penta-O-{3,4-dihydroxy-5-[(3,4,5-trihydroxybenzoyl)oxy]benzoyl}-D-glucopyranose. In even more preferred embodiments, the tannic acid is 1,2,3,4,6-penta-O-{3,4-dihydroxy-5-[(3,4,5-trihydroxybenzoyl)oxy]benzoyl}-D-glucopyranose.

Condensed tannins contain functional groups and have been obtained by condensation, wherein the individual molecular units are linked via a carbon-carbon bond. Usually, condensed tannins are polymers formed by the condensation of flavans, such as flavan-3-ol, flavan-4-ol, or flavan-3,4-diols, and in particular flavan-3-ol. Condensed tannins may be selected from proanthocyanidins, polyflavonoid tannins, catechol-type tannins, pyrocatecollic type tannins, non-hydrolyzable tannins and flavolans. Condensed tannins usually do not contain sugar residues. Flavan-3-ol-based tannins may be selected from procyanidins, propelargonidins, prodelphinidins, profisetinidins, proteracacinidins, proguibourtinidins or prorobinetidins. A flavan-3,4-diols-based tannin may be leuco-fisetinidin, and a flavan-4-ol-based tannin may be 3',4',5,7-flavan-4-ol form proluteolinidin (luteoforolor). One particular type of condensed tannin, found in grape, are procyanidins, which are polymers of 2 to 50 (or more) catechin units joined by carbon-carbon bonds. These are not susceptible to being cleaved by hydrolysis.

Phlorotannins are usually based on phloroglucinol (benzene-1,3,5-triol) and may be in the form of a polyphloroglucinol.

In a preferred embodiment, the tannin comprises a condensed tannin or a hydrolysable tannin or a mixture thereof. In an even more preferred embodiment, the tannin comprises a hydrolysable tannin.

In a particular preferred embodiment, the tannin comprises tannic acid.

The thermoplastic shell may consist only of tannins, preferably of hydrolysable tannins, phlorotannins, and condensed tannins, more preferably of hydrolysable tannins, and condensed tannins, even more preferably of hydrolysable tannins, and most preferably of tannic acid. However, in embodiments, the thermoplastic shell can also comprise further components, such as one or more non-polymeric additives or one or more polymeric components. In a preferred embodiment, the thermoplastic shell further comprises one or more polymeric components.

In some embodiments, the thermoplastic shell further comprises a polymeric component (which can be considered a first polymeric component if more than one different polymeric component is present). The polymeric compound is different from tannin.

In some embodiments, the thermoplastic shell comprises, in addition to a first polymeric component, a further second polymeric component which is different from the first polymeric component. The second polymeric compound is different from tannin.

In some embodiments, the thermoplastic shell comprises, in addition to a first and a second polymeric component, even a further third polymeric component which is different from the first and second polymeric components. The third polymeric compound is different from tannin.

Where the shell comprises one or more polymeric components, the total content of the polymeric component(s) may be up to 99.9 wt%, for example up to 99 wt%, up to 98 wt%, up to 95 wt%, up to 90 wt%, up to 80 wt%, up to 70 wt%, or up to 60 wt%. In further embodiments, the content of the polymeric component(s) may be up to 50 wt%, for example less than up to 30 wt%, or less than up to 10 wt%, such as 9 wt% or below, 5 wt% or below or even 2 wt% or below. These percentages are based on the total weight of the thermoplastic shell. In some embodiments, the shell comprises polymeric components in an amount of at least 0.1 wt%, at least 0.5 wt%, at least 1 wt%, at least 5 wt%, or at least 10 wt%. In some embodiments, the shell comprises polymeric components in an amount of 0.1 to 50 wt%, such as 0.5 to 50 wt%, 1 to 45 wt%, or 5 to 40 wt%.

In other embodiments, where the shell comprises one or more polymeric components, the total content of the polymeric component(s) may be 50 to 99.9 wt%, preferably 55 to 99 wt%, more preferably 60 to 98 wt%, and more preferably 70 to 95 wt% of the polymeric component(s), wherein the wt% are based on the total weight of the thermoplastic shell.

In some embodiments, the thermoplastic shell can comprise at least 0.1 wt%, such as at least 0.5 wt%, at least 1 wt%, at least 2 wt%, at least 3 wt%, at least 5 wt%, at least 10 wt%, at least 20 wt%, or at least 30 wt%, at least 50 wt%, at least 60 wt%, at least 70 wt% or at least 80 wt%, at least 90 wt%, at least 95 wt%, or at least 98 wt% of tannins, preferably of hydrolysable tannins, phlorotannins, and condensed tannins, more preferably of hydrolysable tannins, and condensed tannins, even more preferably of hydrolysable tannins, and most preferably of tannic acid. These percentages are based on the total weight of the thermoplastic shell. In some embodiments, the thermoplastic shell comprises not more than 98 wt%, such as not more than 95 wt%, not more than 90 wt%, not more than 80 wt%, not more than 70 wt%, not more than 60 wt%, not more than 50 wt%, not more than 30 wt%, not more than 20 wt%, not more than 10 wt%, not more than 5 wt%, not more than 3 wt%, not more than 2 wt%, or even not more than 1 wt% of tannins, preferably of hydrolysable tannins, phlorotannins, and condensed tannins, more preferably of hydrolysable tannins, and condensed tannins, even more preferably of hydrolysable tannins, and most preferably of tannic acid.

The further polymeric components are not limited and, hence, if present, any polymeric component known to the skilled person can be used as a polymeric component. In some embodiments, the thermoplastic shell further comprises at least one polymeric component selected from the group consisting of polysaccharides, polysaccharide derivatives, polyesters, polyethers, polyacids, polyols, polyalkenes, lignins, polyvinyls, or any combination thereof. In some embodiments, the polysaccharides and polysaccharide derivatives may be selected from the group consisting of cellulose, cellulose derivatives, chitosan, hemicellulose, and alginates, and preferably are selected from cellulose, cellulose derivatives, and chitosan. Cellulose derivatives may be cellulose esters or carboxy cellulose. In some embodiments, the lignin may be selected from Kraft lignin, sulfonated lignin (also called lignosulfonates), organosolv lignin, hydrolysis lignin, steam explosion lignin, milled wood lignin, acetylated lignin, and soda lignin. Polyvinyls may be polyvinylacetates, such as poly(1-vinylpyrrolidone-co-vinyl acetate), or polyvinyl alcohols, such as a polyvinyl alcohol with a degree of hydrolysis of at least 20 mol%, such as from about 30 to >99 mol%. In some embodiments, the polymeric component may be selected from alkyl cellulose, carboxy cellulose, copolymers of vinyl acetate, polylactic acid, polyethylene glycol, polyvinyl alcohol, polyacids, such as polyacrylic acid, nanocrystalline cellulose, or combinations thereof.

In a preferred embodiment, the polymeric component is selected from cellulose, cellulose derivatives, chitosan, lignin, and any combination thereof. In an even more preferred embodiment, the polymeric component is selected from cellulose derivatives, lignin, and any combination thereof, and most preferably is selected from alkyl cellulose, cellulose ester, carboxy cellulose, lignosulfonates, Kraft lignin, such as acetylated Kraft lignin, and any combination thereof.

In some embodiments, where the shell comprises more than one different polymeric component, a first polymeric component may be selected from any of the above described polymeric components and a second component (which is different from the first polymeric component) may be selected from cellulose, cellulose derivatives, chitosan, lignin, and polyvinyls, preferably from cellulose derivatives, lignin, and polyvinyls, such as polyvinylacetate and polyvinyl alcohol, and most preferably is selected from carboxy cellulose, Kraft lignin, such as acetylated Kraft lignin, polyvinylacetate, such as poly(1-vinylpyrrolidone-co-vinyl acetate), and polyvinyl alcohol, such as a polyvinyl alcohol with a degree of hydrolysis of at least 20 mol%, such as from about 30 to >99 mol%.

In one embodiment, the thermoplastic shell comprises or consists of a tannin and a polyvinyl alcohol. Preferably, the tannin comprises or consists of tannic acid. Preferably, the weight ratio of tannin : polyvinyl alcohol in the thermoplastic shell is in the range of from about 10:90 to about 90:10, preferably about 15:85 to about 85:15, more preferably about 80:20 to about 20:80. The polyvinyl alcohol preferably has a degree of hydrolysis of at least 20 mol%, such as from about 30 to >99 mol%. Polyvinyl alcohol with a specific degree of hydrolysis is typically obtained by controllably hydrolyzing polyvinyl acetate, ergo a polyvinyl alcohol polymer obtained in this manner and having a degree of hydrolysis of less than 100% is, strictly speaking, a poly(vinyl acetate-co-vinyl alcohol) polymer but is more commonly referred to as a polyvinyl alcohol having a degree of hydrolysis of x mol%. The polyvinyl alcohol polymer preferably has a weight average molecular weight (GPC) within the range of from about 5000-200,000 Daltons (Da), such as from about 10,000 to about 150,000 Da, such as from about 10,000 to about 50,000 Da, such as from about 13,000 to about 23,000 Da. It would be routine for persons skilled in the art to prepare a polyvinyl alcohol with a specific degree of hydrolysis and/or a specific molecular weight.

In embodiments, the thermoplastic shell comprises one or more non-polymeric additives. The thermoplastic shell may contain any such non-polymeric additives in addition to any of or any combination of the polymeric component(s) as described above. The non-polymeric additives as such are not limited. However, in some embodiments, the thermoplastic shell comprises non-polymeric additives selected from the group consisting of carboxylic acids, anhydrides, esters, carbohydrates, alcohols, epoxides and urea. In some embodiments, the non-polymeric additive is selected from citric acid, pyromellitic dianhydride (PMDA), pyromellitic acid (PMA), pyromellitic dianhydride (PMDA), tartaric acid, 1,2,3,4-butanetetracarboxylic acid (BTCA), succinic acid, maleic acid, lactic acid, polyacrylic acid (PAA), urea, sorbitol, glucose, fructose, vitamin C (ascorbic acid), glycerol, and 1,3-butanediol.

The thermally expandable microspheres are hollow, in which the shell comprises the tannin, and the hollow center or core comprises one or more blowing agents. The tannins used to prepare the microspheres typically have a density of 1.0 - 1.35 g/cm³. In the expanded microspheres, the density is typically less than 1 g/cm³, and is suitably in the range of from 0.005 to 0.8 g/cm³, or from 0.01 to 0.75 g/cm³. In further embodiments, the density of the expanded microspheres is in the range of from 0.01 to 0.5 g/cm³. Higher densities, particularly densities of 1 g/cm³ or more, indicate that the microsphere samples are not suitable for use.

The thermally expandable microspheres preferably have a temperature at which expansion starts, Tₛₜₐᵣₜ, of from 90°C to 210°C, such as from 100°C to 210°C. The temperature at which expansion starts is called Tₛₜₐᵣₜ, while the temperature at which maximum expansion is reached is called Tₘₐₓ. Tₛₜₐᵣₜ and Tₘₐₓ may be determined using standard measuring techniques as commonly known by the skilled person. For instance, Tₛₜₐᵣₜ and Tₘₐₓ can be determined in a temperature ramping experiment, by using for example a Mettler-Toledo Thermomechanical Analyser, such as Mettler-Toledo TMA/SDTA 841e, using a heating rate of 20°C / min and a load (net.) of 0.06 N. In such a temperature ramping experiment, a sample of known weight of the thermally expandable microspheres is heated with a constant heating rate of 20°C / min under a load (net.) of 0.06 N. When expansion of the thermally expandable microspheres starts, the volume of the sample increases and moves the load upwards. From such measurement, an expansion thermogram is obtained wherein the ordinate indicates the height of moving the load upwards and the abscissa indicates the temperature. Tₛₜₐᵣₜ and Tₘₐₓ can be determined from this expansion thermogram for instance by using STARe software from Mettler-Toledo.

In embodiments, the thermally expandable microspheres have a Tₛₜₐᵣₜ in the range of from 90°C to 190°C, such as from 110°C to 190°C. Even more preferably the thermally expandable microspheres have a Tₛₜₐᵣₜ in the range from 120°C to 185°C, and most preferably in the range of from 125°C to 185°C.

A number of factors can result in high densities, such as poor expansion characteristics, which can arise where too many of the microspheres contain insufficient blowing agent to enable adequate expansion. This can result from the polymer shell being too permeable to the blowing agent, or due to the formation of so-called "multiple core" microspheres where, instead of a single blowing agent-containing core, there are multiple blowing agent-containing cores within the shell (e.g. like a microspherical foam or sponge). In such multi-core microspheres, the blowing agent concentration is typically too low to reduce the density adequately. Another cause is aggregation or agglomeration of the polymer, resulting in poor microsphere production and a denser material. Too high a proportion of aggregated material or poorly expanding microspheres can also lead to large inhomogeneity in the expansion characteristics of the resulting microsphere product. This is particularly unfavourable for surface-sensitive applications such as coatings, where a smooth finish is desirable.

Illustrative cross sections of single core and multi-core microspheres are provided in Figures 1A and 1B respectively, where regions of shell material, 1, are represented by the cross-hatched areas, and blowing agent-containing regions, 2, are represented by blank areas.

In further embodiments, the thermoplastic shell can comprise particles to improve the mechanical properties and gas barrier of the thermoplastic shell. Examples of such particles are talc, montmorillonite, and various types of clay, such as bentonite.

The hollow core of the thermally expandable microspheres of the present invention comprises a blowing agent. The blowing agent can comprise one or more different blowing agents. The one or more blowing agents generally have a boiling point above 25°C at 5.0 bara pressure or above 25°C at 3.0 bara pressure, where "bara" stands for bar-absolute. In embodiments, they have a boiling point above 25°C at atmospheric pressure (1.013 bara). Typically, they have a boiling point of 250°C or less at atmospheric pressure, for example 220°C or less, or 200°C or less. They are preferably inert, and do not react with the tannin shell. Boiling points at elevated pressures can be calculated using the Clausius Clapeyron equation.

Examples of blowing agents include alcohols, esters, dialkyl ethers, alkanes and halocarbons, e.g. chlorocarbons, fluorocarbons or chlorofluorocarbons. In embodiments, the alcohol comprises a C₂ to C₈ alcohol, such as a C₂ to C₆ alcohol or a C₂ to C₄ alcohol. In embodiments, the ester comprises two alkyl groups, which may each be individually selected from C₂ to C₅ alkyl groups. In embodiments, the dialkyl ether comprises two alkyl groups each selected from C₂ to C₅ alkyl groups. In embodiments, the alkane is a C₄ to C₁₂ alkane. In embodiments, the haloalkane is selected from C₂ to C₁₀ haloalkanes. The haloalkanes can comprise one or more halogen atoms selected from chlorine and fluorine. The alkyl or haloalkyl groups in the alcohols, dialkyl ethers, alkanes and haloalkanes can be linear, branched or cyclic. One or a mixture of one or more blowing agents can be used.

In embodiments, for environmental reasons, the one or more blowing agents are selected from alcohols, esters, alkyl ethers and alkanes, and in further embodiments the one or more blowing agents are selected from alcohols and alkanes, and preferably are alcohols. Haloalkanes are preferably avoided, due to their potential ozone depletion properties, and also due to their generally higher global warming potential.

Examples of suitable blowing agents that can be used include ethanol, n-propanol, isopropanol, n-butanol, tert-butyl alcohol, n-pentanol, isopentanol, n-hexanol, isohexanol, heptanol, isoheptanol, octanol, isooctanol, tert-butyl acetate, butyl acetate, methyl tert-butyl ether, n-pentane, isopentane, neopentane, cyclopentane, cyclohexane, n-butane, isobutane, isohexane, neohexane, heptane, isoheptane, octane, isooctane, isodecane, and isododecane. In preferred embodiments, the blowing agent is selected from C₂ to C₈ alcohols, such as C₂ to C₆ alcohols or C₂ to C₄ alcohols. In further preferred embodiments, the blowing agent comprises a blowing agent selected from isooctane, isohexane, tert-butyl acetate, butyl acetate, methyl tert-butyl ether, tert-butyl alcohol, and combinations thereof. In particularly preferred embodiments the blowing agent comprises tert-butyl alcohol or isooctane or a combination thereof.

In the expandable microspheres, the one or more blowing agents are typically present in an amount of from 0.5 to 50 wt%, based on the total weight of the shell material and blowing agent(s), for example in the range of from 1 to 40 wt%, or from 2 to 30 wt%.

The expandable microspheres of the invention are obtainable by a spray drying process comprising mixing the tannin, a solvent, the blowing agent, and optionally any further component, such as a polymeric component or a non-polymeric component, and then spraying the thus obtained mixture into a drying equipment to produce the thermally expandable microspheres having a thermoplastic shell surrounding a hollow core, in which the thermoplastic shell comprises the tannin, and the hollow core comprises the blowing agent.

In principle, the spray drying equipment for performing the spray drying process is not limited and any conventional and commercially available spray drying equipment can be used for the spray drying process. A typical spray drying equipment suitable for the process described herein comprises a drying chamber equipped with a nozzle, an inlet for drying gas and an outlet which connects the drying chamber with a cyclone. Through the nozzle which is normally located at the top of the spraying chamber (but may be also located on any other portion of the spray dryer) the liquid to be atomized is sprayed, usually in combination with a spray gas, into the drying chamber. In the drying chamber, the atomized liquid is dried by the drying gas which is fed into the spraying chamber through the inlet for drying gas. The inlet of drying gas may for instance be located besides the nozzle. The atomized liquid dries and forms particles. The thus obtained particles are then fed together with the drying gas through the outlet of the drying chamber which is normally located in the bottom area of the drying chamber into a cyclone. In the cyclone the particles are separated from the drying air. The drying air may be further filtered to remove any residual particles from the drying air.

A suitable spray drying equipment for performing the spray drying process is the Büchi mini spry dryer B-290 which is commercially available from Büchi/Switzerland.

The order of adding the tannin, the solvent, the blowing agent and, optionally, the any further component, such as a polymeric component or a non-polymeric component, is not restricted and any order can be chosen.

However, in a preferred embodiment, in the process for producing the expandable microspheres, the tannins are mixed first with the solvent and, optionally, the any further component, such as a polymeric component or a non-polymeric component, and then, in a further step, the blowing agent is added to the mixture.

The mixing of the tannin can be carried out at ambient temperature, although temperatures in the range of from 5 to 75°C can be used. Mixing is usually performed till the tannin has completely dissolved in the solvent.

In embodiments, the mixture of the tannin with the solvent and, optionally, the any further component, such as a polymeric component or a non-polymeric component, can be left or stirred for a period of time, for example from 1 to 100 hours, or from 2 to 50 hours. This can be at temperatures in the range of from 10 to 95°C, for example at a temperature of from 20 to 90°C.

In a further step, the blowing agent is added to the mixture of the tannin, solvent, and optionally, the any further component, such as a polymeric component or a non-polymeric component. Also this mixing step can be carried out at ambient temperature, although temperatures in the range of from 5 to 75°C can be used. Also this mixing step is usually performed till the blowing agent has completely dissolved in the solvent.

After the addition of the blowing agent to the mixture of the tannin, solvent, and, optionally, the any further component, such as a polymeric component or a non-polymeric component, the thus obtained mixture may be further stirred for a period of time, for example from 1 to 100 hours, or from 2 to 50 hours. Also this can be at temperatures in the range of from 10 to 95°C, for example at a temperature of from 20 to 90°C.

The mixture comprising the tannin, the solvent, the blowing agent and, optionally, the any further component, such as a polymeric component or a non-polymeric component, is then sprayed into a drying equipment to produce the thermally expandable microspheres as described herein. The drying equipment may be a spray drying equipment as described above.

The optional spray gas that is sprayed through the nozzle together with the liquid to be atomized is not particularly limited and may be any suitable spray gas known by the skilled person. For instance, the spray gas may be selected from nitrogen, carbon dioxide, (pressurized) air, noble gases, such as argon, etc. Preferably, in the method for producing expandable microspheres as described herein a spray gas is used and more preferably this spray gas is nitrogen.

Also the drying gas is not particularly limited and may be any suitable drying gas known by the skilled person. For instance, also the drying gas may be selected from nitrogen, carbon dioxide, (pressurized) air, noble gases, such as argon, etc. Preferably, the drying gas is nitrogen.

Further process parameters for running the spray drying equipment, such as the spray gas flow, the inlet temperature of the drying gas when entering the drying chamber, the feed rate of the liquid to be atomized and the aspirator speed to circulate the drying gas in the spray drying equipment can be readily chosen by the skilled person.

It has been found that with the above-described method it is possible to obtain expandable microspheres comprising a thermoplastic shell surrounding a hollow core, wherein the hollow core comprises a blowing agent, and the thermoplastic shell comprises tannin.

The solvent can be water or an organic solvent selected from those having one or more functional groups selected from esters, amides, aldehydes, ketones, alcohols (including glycols) and ethers, for example those having 1 to 12 carbon atoms. Esters, ketones and ethers may, in embodiments, be part of a cyclic structure. Further examples include haloalkanes having from 1 to 6 carbon atoms and halo-carboxylic acids having from 1 to 6 carbon atoms, where the halogen is selected from fluorine, chlorine, bromine and iodine. The solvent can also be a mixture of water and an organic solvent, such as any of the organic solvents as described above.

Examples of organic solvents that can be used include ethyl acetate, ethyl formate, methyl acetate, n-propyl formate, isopropyl formate, n-propyl acetate, isopropyl acetate, isobutyl acetate, n-butyl acetate, n-pentyl formate, isopentyl formate, n-pentyl acetate, isopentyl acetate, ethyl propionate, isobutyl isobutyrate, n-butyl propionate, ethyl 3-ethoxypropionate, 2-ethylhexyl acetate, acetone, methyl ethyl ketone, diethyl ketone, methyl isobutyl ketone, methyl isoamyl ketone, methyl n-amyl ketone, mesityl oxide, acetophenone, cyclohexanone, diethyl phthalate, ethyl lactate, benzyl acetate, butyrolactone, acetyl acetone, methyl cyclohexanone, benzaldehyde, diisobutyl ketone diacetone alcohol, ethylene glycol, glyceryl-α-monochlorohydrin, propylene glycol, glycol ethers (for example propylene glycol monomethyl ether, ethylene glycol mono-methyl ether, ethylene glycol mono-ethyl ether, ethylene glycol mono-n-butyl ether, propylene glycol mono-tert-butyl ether, propylene glycol monopropyl ether, propylene glycol monobutyl ether), glycol ether esters (for example ethylene glycol mono-methyl ether acetate, ethylene glycol mono-ethyl ether acetate, ethylene glycol mono-butyl ether acetate, ethylene glycol diacetate), methanol, ethanol, n-propyl alcohol, isopropyl alcohol, n-butanol, sec-butanol, isobutanol, benzyl alcohol, diisopropyl ether, dimethoxymethane, dimethoxyethane, 1,4-dioxane, 1,3-dioxolane, tetrahydrofuran, anisole, phenetole and dimethyl formamide. Other examples of solvents include dimethyl sulfoxide, toluene, xylene, n-methyl-2-pyrrolidone, methylene chloride, chloroform, carbon tetrachloride, trichloroacetic acid, methylene bromide, methylene iodide, trichloroethylene, and tetrachloroethylene. The organic solvent can be a mixture of two or more solvents. If the solvent is a mixture of two or more organic solvents, it is preferred that one solvent thereof is acetone. In embodiments, the acetone is mixed with an alcohol, such as methanol or ethanol.

In some embodiments, the solvent is a mixture of water and an organic solvent. In such embodiments, it is preferred that the mixture contains water in an amount of not more than 50 wt%, such as not more than 40 wt%, not more than 30 wt%, or not more than 20 wt% of water. In such embodiments, it is further preferred that the mixture contains water in an amount of at least 1 wt%, such as at least 2 wt% or at least 4 wt%, the wt% being based on the total weight of the solvent.

In particularly preferred embodiments, the solvent is selected from one or more of water, methanol, ethanol, and acetone. More preferred is that the solvent comprises water, methanol, ethanol, or acetone. In some particular preferred embodiments, the solvent comprises acetone. In some embodiments, the solvent comprises a mixture of at least two solvents, which are preferably selected from the group consisting of water, methanol, ethanol, acetone, and combinations thereof. In some embodiments, the solvent comprises acetone and water, or acetone and ethanol.

Typically, the content of shell components in the mixture for spray drying is in the range of from 0.1 to 50 wt%. In embodiments, it can be in the range of from 1 to 40 wt%, for example in the range of from 5 to 35 wt% or even from 10 to 30 wt%. The wt% are based on the total weight of the mixture for spray drying.

In some embodiments, the tannin content in the mixture for spray drying is typically in the range of from 0.1 to 50 wt%. In embodiments, it can be in the range of from 1 to 40 wt%, for example in the range of from 5 to 35 wt% or even from 10 to 30 wt%. The wt% are based on the total weight of the mixture for spray drying.

The amount of blowing agent(s) in the mixture for spray drying is typically in the range of from 0.5 to 50 wt%. In embodiments, it can be in the range of from 0.5 to 40 wt%, for example in the range of from 1 to 30 wt%, from 3 to 25 wt%, or even from 5 to 25 wt%. In embodiments, the weight of blowing agent in the mixture for spray drying is equal to or less than the weight of the shell components, such as tannin, for example the weight ratio of blowing agent to tannin can be 1.5 or less, for example 1.3 or less or even 1.1 or less. In embodiments the minimum weight ratio is 0.1, or in further embodiments 0.2. In embodiments, the weight ratio of blowing agent to tannin in the solvent phase is in the range of from 0.1 to 1.5, such as in the range of from 0.2 to 1.3 or even from 0.3 to 1.1.

The amount of the solvent adds up to 100 wt%. Preferably, the amount of solvent is at least 30 wt%, more preferably at least 40 wt% and even more preferably at least 50 wt%. The wt% are based on the total weight of the mixture for spray drying.

The unexpanded microspheres typically have volume mean particle sizes (diameters), i.e. D(0.5) values, in the range of from 1 to 500 µm, such as 5 to 200 µm or, in embodiments, from 10 to 100 µm or even from 30 to 80 µm.

The expanded microspheres are typically in the range of from 1.5 to 8 times larger in diameter than unexpanded microspheres, for example 2 to 7 times or 3 to 6 times their original diameter.

The particle sizes are suitably measured using light scattering techniques, e.g. laser diffraction, such as low angle laser light scattering (LALLS). They can also be measured by image analysis from a photograph or electronic micrograph image of the pre- or post-expanded microspheres.

To expand the expandable microspheres, they can be heated to a temperature above the boiling point of the blowing agent and the T_{g} of the tannin, and also a temperature below the melting point of the microspheres. To halt the expansion, the microspheres can be cooled back down to below the T_{g} of the tannin and/or the boiling point of the blowing agent.

Ways of heating the expandable microspheres include direct or indirect contact with a heat transfer medium such as steam or pressurised steam, as described for example in WO2004/056549, WO2014/198532 and WO2016/091847. In further embodiments, direct or indirect contact with other heated gases (e.g. air or nitrogen) optionally mixed with steam can be used. In still further embodiments, where indirect heating is used, a liquid heat transfer medium can be used, e.g. heated oil. In another embodiment, IR radiation can be used to heat the microspheres.

Expansion properties of the thermally expandable thermoplastic microspheres can be evaluated using a thermomechanical analyser (e.g. a Mettler TMA 841) and quantitative data can be obtained from images using suitable software, for example STARe software.

The expandable thermoplastic microspheres may be provided in unexpanded form, e.g. for expansion local to their point of use, or they can be pre-expanded before dispatch to the point of end use.

The microspheres can find use in many applications, for example in the manufacture of paper (e.g. embossed paper, a paper filler, a sizing agent), inks, corks, cement-based compositions, adhesives, foams, insulation materials, coatings, rubber-based products, thermoplastics, thermosets, ceramics, non-woven composite materials, fillers etc. to provide for example a lightweight filler in such applications.

The expansion of the microspheres is typically irreversible, i.e. cooling the microspheres after thermal expansion does not result in their contraction back to their pre-expanded size.

Another aspect of the present invention is a process for preparing thermally expandable microspheres, the process comprising mixing an tannin, a solvent, a blowing agent and, optionally, the any further component, such as a polymeric component or a non-polymeric component, and then spraying the thus obtained mixture into a drying equipment to produce the thermally expandable microspheres having a thermoplastic shell surrounding a hollow core, in which the thermoplastic shell comprises the tannin and, optionally, the any further component, such as a polymeric component or a non-polymeric component, and the hollow core comprises the blowing agent.

The process parameters, the spray drying equipment, the tannin, the solvent, the blowing agent, the optional further components, such as a polymeric component or a non-polymeric component, as well as amounts thereof are the same as already described above and equally apply for the process according to the second aspect of the present invention.

In a further aspect, the present invention is also directed to thermally expandable microspheres obtained by the process for preparing thermally expandable microspheres as described above.

### Examples

The following examples are intended to illustrate the invention.

Microscopic evaluation of the expansion properties was performed using a Linkam LTS420 heating stage in combination with a Leica DM1000 microscope. The heating rate was 40°C/min.

The expansion characteristics were evaluated using a Mettler TMA 841 thermomechanical analyser, interfaced with a PC running STARe software. The heating rate was 20°C/min, using a load (net.) of 0.06 N.

Gas chromatography - flame-ionization detection (GC-FID) analyses have been performed using an Agilent 7697A Headspace in combination with an Agilent 7890A GC.

### General Synthesis Method:

A solution of tannic acid, a blowing agent and, if applicable, a further component in a suitable solvent was prepared by dissolving the tannic acid, the blowing agent and, if applicable, the further component overnight with the use of a magnetic stirrer.

The further components were:
Citric acid, obtained from Fisher; PMDA, obtained from Merck; chitosan, obtained from Chitolytic (CO-101211, 3 kDa, degree of deacetylation >86,5%); carboxymethyl cellulose (CMC), obtained from Nouryon (8-10 kDa, DS 0.7); a first lignin (lignin1), obtained from Domsjö (lignosulfonate, DP20, 12 kDa); a second lignin (lignin2), obtained from Borregaard (lignosulfonate, DP-35512); a third lignin (lignin3), obtained from UPM Biochemicals (Kraft lignin, BioPiva 100); a fourth lignin (lignin4), obtained from UPM Biochemicals (Kraft lignin, BioPiva 100) and acetylated in-house; a fifth lignin (lignin5), obtained from Södra (Kraft lignin, Lignin); a sixth lignin (lignin6), obtained from Bloom (organosolv lignin, Beechwood AAF Lignin); a first cellulose acetate (CA1), obtained from Eastman (CA-398-3, 30 kDa, DS 2.45); a second cellulose acetate (CA2), obtained from Cerdia (17 kDa, DS 2.1; a cellulose acetate propionate (CAP), obtained from Eastman (CAP-482-0.5, 25 kDa, DS(Ac) 0.1, DS(Pr) 2.35); a cellulose acetate butyrate (CAB), obtained from Eastman; poly(1-vinylpyrrolidone-co-vinyl acetate) (PVPVA), obtained from Merck (190837); a first polyvinyl alcohol (PVA1) obtained from Kuraray (Kuraray Poval LM-20, degree of hydrolysis of 40 mol.%); and a second polyvinyl alcohol (PVA2) obtained from Sigma-Aldrich (Mw 13,000-23,000; degree of hydrolysis of 98 mol.%).

The thus obtained mixture was then sprayed-dried using a Büchi Mini Spray Dryer B-290. Nitrogen was used as spray gas with a feed rate of 238-307 I/h. The feed rate of the mixture to be spray dried was 4-13 ml/min (depending on the solvent). The temperature of the drying gas at the inlet was 70-150°C (depending on the solvent) and the aspirator rate was 38 m³/h.

Dried solids were collected from the bottom of the cyclone and analysed.

Details of the samples that were prepared are shown in Table 1, and data on the resulting microspheres are shown in Table 2.

**Table 1 - Synthesis Details**

| **No.** | **Tannin (wt%)** | | **First further component (wt%)** | | **Second further component (wt%)** | | **Solvent (wt%) (1) (3)** | **Blowing Agent (wt%) (1) (4)** |
|---|---|---|---|---|---|---|---|---|
| | **(1)** | **(2)** | **(1)** | **(2)** | **(1)** | **(2)** | | |
| 1 | Tannic acid | | - | | - | | Water (48.1) | t-BuOH (19.5) |
| | 32.5 | 100 | - | - | - | - | | |
| 2 | Tannic acid | | Chitosan | | - | | Water (58.3) | t-BuOH (8.3) |
| | 20.0 | 60 | 13.3 | 40 | | | | |
| 3* | - | | Chitosan | | - | | Water (75.0) | t-BuOH (5.0) |
| | - | - | 20.0 | 100 | - | - | | |
| 4 | Tannic acid | | CMC | | - | | Water (68.4) | t-BuOH (9.0) |
| | 9.0 | 40 | 13.6 | 60 | | | | |
| 5* | - | | CMC | | - | | Water (79.1) | t-BuOH (7.0) |
| | - | - | 14.0 | 100 | - | - | | |
| 6 | Tannic acid | | Lignin1 | | - | | Water (53.2) | t-BuOH (10.8) |
| | 28.8 | 80 | 7.2 | 20 | - | - | | |
| 7 | Tannic acid | | Lignin1 | | - | | Water (60.0) | t-BuOH (6.7) |
| | 6.7 | 20 | 26.7 | 80 | - | - | | |
| 8 | Tannic acid | | Lignin2 | | - | | Water (62.3) | t-BuOH (6.9) |
| | 3.1 | 10 | 27.7 | 90 | - | - | | |
| 9 | Tannic acid | | - | | - | | Actn (53.2) | t-BuOH (10.8) |
| | 36.0 | 100 | - | - | - | - | | |
| 10 | Tannic acid | | Citric acid | | - | | Actn (53.2) | t-BuOH (10.8) |
| | 28.8 | 80 | 7.2 | 20 | - | - | | |
| 11 | Tannic acid | | PMDA | | - | | Actn (53.2) | t-BuOH (10.8) |
| | 28.8 | 80 | 7.2 | 20 | - | - | | |
| 12 | Tannic acid | | PMDA | | - | | Actn (53.2) | t-BuOH (10.8) |
| | 21.6 | 60 | 14.4 | 40 | - | - | | |
| 13 | Tannic acid | | CA1 | | - | | Actn (69.5) | t-BuOH (7.0) |
| | 18.8 | 80 | 4.7 | 20 | - | - | | |
| 14 | Tannic acid | | CA1 | | - | | Actn (74.9) | t-BuOH (5.8) |
| | 11.6 | 60 | 7.7 | 40 | - | - | | |
| 15 | Tannic acid | | CA1 | | - | | Actn (82.2) | Isooctane (6.0) |
| | 5.6 | 47 | 6.2 | 53 | - | - | | |
| 16 | Tannic acid | | CA1 | | - | | Actn (83.9) | Isooctane (5.6) |
| | 4.2 | 40 | 6.3 | 60 | - | - | | |
| 17 | Tannic acid | | CA1 | | - | | Actn (85.9) | Isooctane (4.9) |
| | 2.8 | 30 | 6.4 | 70 | - | - | | |
| 18 | Tannic acid | | CA1 | | - | | Actn (87.9) | Isooctane (4.2) |
| | 1.6 | 20 | 6.3 | 80 | - | - | | |
| 19 | Tannic acid | | CA1 | | - | | Actn (89.1) | Isooctane (3.8) |
| | 0.7 | 10 | 6.4 | 90 | - | - | | |
| 20 | Tannic acid | | CA2 | | - | | Actn / Water (ratio 96/4) (83.7) | Isooctane (4.1) |
| | 4.9 | 40 | 7.3 | 60 | - | - | | |
| 21 | Tannic acid | | CA2 | | - | | Actn / Water (ratio 96/4) (87.7) | Isooctane (3.1) |
| | 1.8 | 20 | 7.3 | 80 | - | - | | |
| 22 | Tannic acid | | CA2 | | - | | Actn / Water (ratio 96/4) (89.2) | Isooctane (2.7) |
| | 0.8 | 10 | 7.3 | 90 | - | - | | |
| 23 | Tannic acid | | CAP | | - | | Actn (71.9) | Isooctane (9.7) |
| | 5.5 | 30 | 12.8 | 70 | - | - | | |
| 24 | Tannic acid | | CAP | | - | | Actn (75.2) | Isooctane (8.6) |
| | 3.2 | 20 | 12.9 | 80 | - | - | | |
| 25 | Tannic acid | | CAP | | - | | Actn (76.6) | Isooctane (8.7) |
| | 1.5 | 10 | 13.2 | 90 | - | - | | |
| 26* | - | | CAP | | - | | Actn (77.8) | Isooctane (8.9) |
| | - | - | 13.4 | 100 | - | - | | |
| 27 | Tannic acid | | CAB | | - | | Actn (72.2) | Isooctane (11.1) |
| | 5.0 | 30 | 11.7 | 70 | - | - | | |
| 28 | Tannic acid | | CAB | | - | | Actn (75.6) | Isooctane (9.8) |
| | 2.9 | 20 | 11.7 | 80 | - | - | | |
| 29 | Tannic acid | | CAB | | - | | Actn (78.3) | Isooctane (8.7) |
| | 1.3 | 10 | 11.7 | 90 | - | - | | |
| 30 | Tannic acid | | Lignin3 | | - | | Actn / Ethanol (ratio 80/20) (53.2) | t-BuOH (10.8) |
| | 28.8 | 80 | 7.2 | 20 | - | - | | |
| 31 | Tannic acid | | Lignin3 | | - | | Actn / Ethanol (ratio 80/20) (53.2) | t-BuOH (10.8) |
| | 21.6 | 60 | 14.4 | 40 | - | - | | |
| 32 | Tannic acid | | Lignin3 | | - | | Actn / Ethanol (ratio 80/20) (53.2) | t-BuOH (10.8) |
| | 14.4 | 40 | 21.6 | 60 | - | - | | |
| 33 | Tannic acid | | Lignin3 | | - | | Actn / Ethanol (ratio 80/20) (64.9) | t-BuOH (8.1) |
| | 5.4 | 20 | 21.6 | 80 | - | - | | |
| 34* | - | | Lignin3 | | - | | Actn / Ethanol (ratio 80/20) (72.0) | t-BuOH (6.5) |
| | - | - | 21.6 | 100 | - | - | | |
| 35 | Tannic acid | | Lignin4 | | - | | Actn (55.6) | t-BuOH (13.6) |
| | 24.7 | 80 | 6.2 | 20 | - | - | | |
| 36 | Tannic acid | | Lignin4 | | - | | Actn (55.6) | t-BuOH (13.6) |
| | 18.5 | 60 | 12.3 | 40 | - | - | | |
| 37 | Tannic acid | | Lignin4 | | - | | Actn (55.6) | t-BuOH (13.6) |
| | 12.3 | 40 | 18.5 | 60 | - | - | | |
| 38* | - | | Lignin4 | | - | | Actn (66.7) | t-BuOH (11.1) |
| | - | - | 22.2 | 100 | - | - | | |
| 39 | Tannic acid | | Lignin5 | | - | | Actn / Water (ratio 90/10) (62.0) | t-BuOH (7.0) |
| | 24.8 | 80 | 6.2 | 20 | - | - | | |
| 40 | Tannic acid | | Lignin5 | | - | | Actn / Water (ratio 90/10) (62.0) | t-BuOH (7.0) |
| | 18.6 | 60 | 12.4 | 40 | - | - | | |
| 41 | Tannic acid | | Lignin5 | | - | | Actn / Water (ratio 90/10) (62.0) | t-BuOH (7.0) |
| | 12.4 | 40 | 18.6 | 60 | - | - | | |
| 42 | Tannic acid | | Lignin5 | | - | | Actn / Water (ratio 90/10) (66.7) | t-BuOH (5.6) |
| | 5.6 | 20 | 22.2 | 80 | - | - | | |
| 43 | Tannic acid | | Lignin5 | | - | | Actn / Water (ratio 90/10) (68.8) | t-BuOH (5.7) |
| | 2.6 | 10 | 22.9 | 90 | - | - | | |
| 44* | - | | Lignin5 | | - | | Actn / Water (ratio 90/10) (72.5) | t-BuOH (5.0) |
| | - | - | 22.4 | 100 | - | - | | |
| 45 | Tannic acid | | Lignin3 | | CA1 | | Actn / Water (ratio 90/10) (78.8) | t-BuOH (3.0) |
| | 6.1 | 33 | 7.3 | 40 | 4.8 | 27 | | |
| 46 | Tannic acid | | Lignin6 | | CA1 | | Actn / Water (ratio 90/10) (77.6) | t-BuOH (3.0) |
| | 7.5 | 38 | 7.2 | 37 | 4.8 | 25 | | |
| 47 | Tannic acid | | CA1 | | CAP | | Actn (86.0) | Isooctane (4.9) |
| | 1.8 | 20 | 5.5 | 60 | 1.8 | 20 | | |
| 48 | Tannic acid | | CA1 | | CAP | | Actn (83.2) | Isooctane (5.9) |
| | 3.9 | 36 | 5.3 | 48 | 1.8 | 16 | | |
| 49 | Tannic acid | | Lignin3 | | PVPVA | | Actn / Ethanol (ratio 80/20) (65.8) | t-BuOH (4.6) |
| | 11.4 | 38 | 11.0 | 37 | 7.3 | 25 | | |
| 50 | Tannic acid | | Lignin6 | | PVPVA | | Actn / Water (ratio 90/10) (79.3) | t-BuOH (2.8) |
| | 6.9 | 38 | 6.6 | 37 | 4.4 | 25 | | |
| 51 | Tannic acid | | Lignin3 | | CAB | | Actn / Ethanol (ratio 80/20) (71.9) | t-BuOH (3.7) |
| | 9.4 | 38 | 9.0 | 37 | 6.0 | 25 | | |
| 52 | Tannic acid | | PVA1 | | - | | Actn/Water (ratio 67/33) (83.6) | t-BuOH (6.2) |
| | 2.6 | 25 | 7.7 | 75 | - | - | | |
| 53 | Tannic acid | | PVA1 | | - | | Actn/Water (ratio 67/33) (80.6) | t-BuOH (7.3) |
| | 4.8 | 40 | 7.3 | 60 | - | - | | |
| | | | | | | | | |
| 54 | Tannic acid | | PVA1 | | - | | Actn/Water (ratio 67/33) (80.5) | t-BuOH (7.3) |
| | 6.1 | 50 | 6.1 | 50 | - | - | | |
| 55 | Tannic acid | | PVA1 | | - | | Actn/Water (ratio 67/33) (73.5) | t-BuOH (9.9) |
| | 10.0 | 60 | 6.6 | 40 | - | - | | |
| 56 | Tannic acid | | PVA1 | | - | | Actn/Water (ratio 67/33) (75.6) | t-BuOH (9.2) |
| | 11.5 | 75 | 3.8 | 25 | - | - | | |
| 57 | Tannic acid | | PVA1 | | - | | Actn/Water (ratio 67/33) (58.1) | t-BuOH (15.7) |
| | 21.0 | 80 | 5.2 | 20 | - | - | | |
| 58 | Tannic acid | | PVA1 | | - | | Actn/Water (ratio 88/12) (75.8) | Isooctane (9.1) |
| | 9.1 | 60 | 6.1 | 40 | - | - | | |
| 59 | Tannic acid | | PVA1 | | - | | Actn/Water (ratio 92/8) (69.8) | Isooctane (11.3) |
| | 15.1 | 80 | 3.8 | 20 | - | - | | |
| 60 | Tannic acid | | PVA2 | | - | | Actn/Water (ratio 19/82) (78.0) | t-BuOH (7.5) |
| | 7.5 | 52 | 7.0 | 48 | - | - | | |
| 61 | Tannic acid | | PVA2 | | - | | Water (64.9) | t-BuOH (13.2) |
| | 17.5 | 80 | 4.4 | 20 | - | - | | |

| | | | | | | | | |
|---|---|---|---|---|---|---|---|---|
| (1) wt% based on the total weight of the mixture (2) wt% based on the total weight of the thermoplastic shell components (3) Actn = acetone (4) t-BuOH = tert-butyl alcohol * Comparative example | | | | | | | | |

**Table 2 - Microsphere Properties**

| Sample No. | Expanded Density / g dm⁻³ | Blowing Agent Content / wt% (1) | Tₛₜₐᵣₜ / °C (2) | Tₘₐₓ / °C (3) | Microscopic Evaluation (4) |
|---|---|---|---|---|---|
| 1 | 74 | 14.7 | 146 | 193 | +++ |
| 2 | 165 | 3.6 | 200 | 236 | + |
| 3* | n.d. | n.d. | n.d. | n.d. | - |
| 4 | 123 | n.d. | 209 | 230 | + |
| 5* | n.d. | n.d. | n.d. | n.d. | - |
| 6 | 104 | 6.6 | 167 | 227 | ++ |
| 7 | 282 | 3.3 | 185 | 220 | +++ |
| 8 | 81 | 3.2 | 186 | 207 | +++ |
| 9 | 78 | 11.1 | 148 | 192 | +++ |
| 10 | 120 | 10.8 | 106 | 145 | ++ |
| 11 | 124 | 12.4 | 102 | 156 | ++ |
| 12 | 214 | 11.2 | 105 | 180 | ++ |
| 13 | 40 | 8.7 | 152 | 211 | +++ |
| 14 | 46 | 7.4 | 161 | 205 | +++ |
| 15 | 420 | 20.2 | 174 | 187 | + |
| 16 | 223 | 18.3 | 176 | 191 | + |
| 17 | 56 | 18.8 | 182 | 200 | ++ |
| 18 | 36 | 20.0 | 174 | 207 | ++ |
| 19 | 27 | 16.7 | 172 | 212 | +++ |
| 20 | 106 | 13.9 | 186 | 197 | ++ |
| 21 | 35 | 12.4 | 179 | 204 | ++ |
| 22 | 47 | 10.0 | 176 | 210 | +++ |
| 23 | 61 | 20.9 | 151 | 173 | ++ |
| 24 | 37 | 20.1 | 144 | 171 | +++ |
| 25 | 59 | 16.0 | 140 | 171 | ++ |
| 26* | n.d. | 7.6 | n.d. | n.d. | - |
| 27 | 77 | 22.8 | 157 | 178 | ++ |
| 28 | 34 | 23.7 | 153 | 177 | +++ |
| 29 | 28 | 21.1 | 150 | 177 | +++ |
| 30 | 60 | 11.3 | 139 | 183 | +++ |
| 31 | 72 | 11.0 | 137 | 170 | +++ |
| 32 | 60 | 11.3 | 132 | 167 | +++ |
| 33 | 86 | 11.5 | 132 | 159 | +++ |
| 34* | 252 | 11.2 | 134 | 154 | ++ |
| 35 | 50 | 14.6 | 135 | 175 | +++ |
| 36 | 53 | 14.1 | 131 | 175 | +++ |
| 37 | 88 | 13.0 | 126 | 162 | +++ |
| 38* | n.d. | n.d. | n.d. | n.d. | - |
| 39 | 46 | 9.1 | 149 | 186 | +++ |
| 40 | 45 | 9.0 | 150 | 182 | +++ |
| 41 | 43 | 9.7 | 146 | 171 | +++ |
| 42 | 84 | n.d. | 148 | 171 | ++ |
| 43 | 92 | n.d. | 145 | 164 | ++ |
| 44* | 156 | 9.3 | 144 | 164 | ++ |
| 45 | 54 | 6.1 | 158 | 202 | +++ |
| 46 | 113 | 5.5 | 186 | 211 | +++ |
| 47 | 50 | 16.0 | 177 | 208 | ++ |
| 48 | 104 | 19.5 | 180 | 204 | ++ |
| 49 | 33 | 6.9 | 146 | 174 | +++ |
| 50 | 85 | 6.1 | 147 | 178 | +++ |
| 51 | 105 | 6.1 | 151 | 182 | +++ |
| 52 | 95 | n.d. | 97 | 119 | +++ |
| 53 | 34 | 14.5 | 93 | 107 | +++ |
| 54 | 19 | n.d. | 103 | 119 | +++ |
| 55 | 22 | 17.1 | 98 | 116 | +++ |
| 56 | 12 | n.d. | 120 | 152 | +++ |
| 57 | 19 | 17.9 | 111 | 157 | +++ |
| 58 | 30 | n.d. | 118 | 136 | +++ |
| 59 | 92 | n.d. | 120 | 154 | +++ |
| 60 | 42 | n.d. | 139 | 151 | +++ |
| 61 | 20 | 9.7 | 132 | 169 | +++ |

| | | | | | |
|---|---|---|---|---|---|
| (1) Blowing agent content of the microspheres, measured by GC-FID (2) Temperature at which microspheres began to expand (3) Temperature at which maximum microsphere expansion was observed (4) Microscopic evaluation of the expansion properties of unexpanded microspheres; with - poor; + = ok; ++ good; +++ = very good n.d. = not determined * Comparative example (examples 3, 5, 26, and 38 did not yield any suitable microspheres at all) | | | | | |

These data reveal that tannin-containing compositions can be used to make bio-based microspheres having at least a good expansion under microscopic evaluation and which have a high versatility as regards adjustable temperatures at which expansion starts over a wide range. Moreover, the microspheres of the present invention have suitable expanded densities for use in a wide range of applications and, hence, have a desirable expansion performance.

### Water Resistance Tests:

The microspheres of Samples 24 and 29 as described above were individually subjected to a water resistance test. In this test, approximately 1 g of microspheres was immersed in about 10 ml of water and thoroughly mixed, and the water-microspheres mixtures were then stored for 7 days at ambient temperature (20-25°C) while shaking once a day. After the storage the microspheres were filtered, dried and their properties evaluated.

For comparative purposes two comparative microspheres were prepared (Samples 52 and 53). The microspheres of Sample 52 contain CAP and pyromellitic acid (PMA) and the microspheres of Sample 53 contain CAB and pyromellitic acid (PMA). Also the microspheres of Samples 52 and 53 were subjected to the water resistance test. However, due to apparent quick degradation of the comparative microspheres as determined by visual inspection, the microsphere properties were already evaluated after only one day of storage.

The synthesis details are summarized in Table 3 and the microspheres' properties of the microspheres directly after preparation and after the water resistance test are summarized in Table 4.

**Table 3 - Synthesis Details**

| No. | Tannin (wt%) | | First further component (wt%) | | Second further component (wt%) | | Solvent (wt%) (1) (3) | Blowing Agent (wt%) (1) |
|---|---|---|---|---|---|---|---|---|
| | (1) | (2) | (1) | (2) | (1) | (2) | | |
| 24 | Tannic acid | | CAP | | - | | Actn (75.2) | Isooctane (8.6) |
| | 3.2 | 20 | 12.9 | 80 | - | - | | |
| 29 | Tannic acid | | CAB | | - | | Actn (78.3) | Isooctane (8.7) |
| | 1.3 | 10 | 11.7 | 90 | - | | | |
| 52* | - | | CAP | | PMA | | Actn (76.0) | Isooctane (8.7) |
| | - | - | 13.1 | 85 | 2.3 | 15 | | |
| 53* | - | | CAB | | PMA | | Actn (78.9) | Isooctane (7.9) |
| | - | - | 11.8 | 90 | 1.3 | 10 | | |

| | | | | | | | | |
|---|---|---|---|---|---|---|---|---|
| (1) wt% based on the total weight of the mixture (2) wt% based on the total weight of the thermoplastic shell components (3) Actn = acetone * Comparative example | | | | | | | | |

**Table 4 - Microsphere Properties**

| Sample No. (5) | Expanded Density / g dm⁻³ | Blowing Agent Content / wt% (1) | Tₛₜₐᵣₜ / °C (2) | Tₘₐₓ / °C (3) | Microscopic Evaluation (4) |
|---|---|---|---|---|---|
| 24 | 37 | 20.1 | 144 | 171 | +++ |
| 24 (7d) | 24 | 10.8 | 149 | 174 | +++ |
| 29 | 28 | 21.1 | 150 | 177 | +++ |
| 29 (7d) | 22 | 10.3 | 153 | 178 | +++ |
| 52* | 24 | 19.8 | 127 | 152 | +++ |
| 52* (1d) | 92 | 17.8 | 134 | 159 | ++ |
| 53* | 24 | 20.1 | 138 | 163 | +++ |
| 53* (1d) | 48 | 18.8 | 147 | 171 | ++ |

| | | | | | |
|---|---|---|---|---|---|
| (1) Blowing agent content of the microspheres, measured by GG-FID (2) Temperature at which microspheres began to expand (3) Temperature at which maximum microsphere expansion was observed (4) Microscopic evaluation of the expansion properties of unexpanded microspheres; with - poor; + = ok; ++ good; +++ = very good (5) 1d = after one day in water; 7d = after 7 days in water * Comparative example | | | | | |

One important property to assess water resistance of microspheres is the density of the microspheres before and after storage in water. An increase of the density indicates degradation of microspheres usually due to that some microspheres completely collapse and/or some microspheres lose at least partially their blowing agent and/or water enters the microspheres. The microspheres of inventive Samples 24 and 29 did not show any increase of the density even after seven days of storage in water. Rather, the density even decreases what is thought to be caused by the polymer chains rearranging when the shell is partially swollen with the water, to give a shell with improved properties after the drying. In contrast, the comparative microspheres of Samples 52 and 53 have significantly increased density already after only one day of storage in water indicating that they have a much lower water resistance than was observed for the inventive Samples.

### Storage Stability Tests:

The microspheres of Samples 24 and 29 as well as of Comparative Sample 52 as described above were individually subjected to a storage stability test. In this test, about 2 to 3 grams of microspheres were stored for 6 months in a plastic cup with a lid on it at ambient temperature (20-25°C) on the shelf. After the storage the microspheres' properties were evaluated. The microspheres' properties of the microspheres directly after preparation and after the storage stability test are summarized in Table 5.

**Table 5 - Microsphere Properties**

| Sample No. (5) | Expanded Density / g dm⁻³ | Blowing Agent Content / wt% (1) | Tₛₜₐᵣₜ / °C (2) | Tₘₐₓ / °C (3) | Microscopic Evaluation (4) |
|---|---|---|---|---|---|
| 24 | 37 | 20.1 | 144 | 171 | +++ |
| 24 (6m) | 21 | 11.5 | 147 | 173 | +++ |
| 29 | 28 | 21.1 | 150 | 177 | +++ |
| 29 (6m) | 22 | 9.2 | 154 | 177 | +++ |
| 52* | 24 | 19.8 | 127 | 152 | +++ |
| 52* (6m) | 160 | 11.6 | 133 | 151 | + |

| | | | | | |
|---|---|---|---|---|---|
| (1) Blowing agent content of the microspheres, measured by GC-FID (2) Temperature at which microspheres began to expand (3) Temperature at which maximum microsphere expansion was observed (4) Microscopic evaluation of the expansion properties of unexpanded microspheres; with - poor; + = ok; ++ good; +++ = very good (5) 6m = after six months of storage * Comparative example | | | | | |

One important property to assess storage stability of microspheres is the density of the microspheres before and after storage. An increase of the density indicates degradation of microspheres usually due to that some microspheres completely collapse and/or some microspheres loose at least partially their blowing agent. The microspheres of inventive Samples 24 and 29 did not show any increase of the density even after six months of storage. Rather, the density even decreases what is thought to be caused by the polymer chains rearranging in time, to give a shell with improved properties after the storage. In contrast, the comparative microspheres of Sample 52 have significantly increased density after six months of storage indicating that the comparative examples have much lower storage stability than was observed for the inventive Samples.

## Claims

1. Thermally expandable microspheres comprising a thermoplastic shell surrounding a hollow core, wherein the hollow core comprises a blowing agent, and the thermoplastic shell comprises a tannin.

2. Thermally expandable microspheres according to claim 1, wherein the tannin comprises a condensed tannin or a hydrolysable tannin or a mixture thereof.

3. Thermally expandable microspheres according to claim 1 or 2, wherein the tannin comprises tannic acid.

4. Thermally expandable microspheres according to any of claims 1-3,
wherein the thermoplastic shell further comprises a first polymeric component.

5. Thermally expandable microspheres according to claim 4, wherein the thermoplastic shell further comprises a further second polymeric component which is different from the first polymeric component.

6. Thermally expandable microspheres according to claim 4 or 5, wherein the thermoplastic shell comprises up to 50 wt%, preferably 1 to 45 wt%, more preferably 5 to 40 wt% of the polymeric component(s), wherein the wt% are based on the total weight of the thermoplastic shell.

7. Thermally expandable microspheres according to claim 4 or 5, wherein the thermoplastic shell comprises 50 to 99.9 wt%, preferably 55 to 99 wt%, more preferably 60 to 98 wt%, and more preferably 70 to 95 wt% of the polymeric component(s), wherein the wt% are based on the total weight of the thermoplastic shell.

8. Thermally expandable microspheres according to any of claims 4-7,
wherein the first polymeric component is selected from the group consisting of cellulose, cellulose derivatives, chitosan, lignin, or polyvinyls.

9. Thermally expandable microspheres according to claim 8, wherein the first polymeric component is selected from cellulose derivatives, lignin, and polyvinyls, and preferably is selected from alkyl cellulose, cellulose ester, carboxy cellulose, lignosulfonates, Kraft lignin, and polyvinyl alcohol.

10. Thermally expandable microspheres according to any of claims 5 to 9, wherein the further second polymeric component is selected from the group consisting of cellulose, cellulose derivatives, lignin, and polyvinyls.

11. Thermally expandable microspheres according to claim 10, wherein the further second polymeric component is selected from cellulose derivatives, lignin, and polyvinyls, and preferably is selected from carboxy cellulose, Kraft lignin, poly(1-vinylpyrrolidone-co-vinyl acetate), and polyvinyl alcohol.

12. Thermally expandable microspheres according to any of claims 1-11,
wherein the blowing agent comprises an alcohol, an ether, an ester, or a hydrocarbon, preferably an alcohol or a hydrocarbon; and preferably the blowing agent comprises a compound selected from the group consisting of isooctane, isohexane, tert-butyl acetate, butyl acetate, methyl tert-butyl ether, tert-butyl alcohol, and combinations thereof, and preferably comprises tert-butyl alcohol or isooctane.

13. A method for preparing thermally expandable microspheres comprising a thermoplastic shell surrounding a hollow core, wherein the hollow core comprises a blowing agent, and the thermoplastic shell comprises a tannin, the method comprising the following steps:
(i) preparing a mixture comprising the tannin and the blowing agent in a solvent; and
(ii) spray-drying the mixture obtained in step (i) so to obtain thermally expandable microspheres.

14. The method of claim 13, wherein the solvent is selected from the group consisting of water, alcohols, ketones, ethers, esters, and combinations thereof.

15. The method of claim 13 or 14, wherein the solvent comprises a mixture of at least two solvents selected from the group consisting of water, methanol, ethanol, acetone, and combinations thereof.
